(19) **Europäisches Patentamt**

**European Patent Office**

**Office européen des brevets**

(11) **EP 0 912 379 B1**

(12) **EUROPÄISCHE PATENTSCHRIFT**

(45) Veröffentlichungstag und Bekanntmachung des Hinweises auf die Patenterteilung:
**13.11.2002 Patentblatt 2002/46**

(51) Int Cl.⁷: **B60T 8/00**

(21) Anmeldenummer: **97921802.1**

(22) Anmeldetag: **26.04.1997**

(86) Internationale Anmeldenummer:
**PCT/EP97/02176**

(87) Internationale Veröffentlichungsnummer:
**WO 98/003382 (29.01.1998 Gazette 1998/04)**

(54) **VERFAHREN ZUR VERBESSERUNG DES REGELVERHALTENS EINES ABS IN DER KURVE**

METHOD OF IMPROVING ABS CONTROL BEHAVIOUR ON CORNERING

PROCEDE POUR AMELIORER LE COMPORTEMENT EN REGULATION D'UN SYSTEME ANTIBLOCAGE DANS UN PARCOURS EN COURBE

(84) Benannte Vertragsstaaten:
**DE FR GB**

(30) Priorität: **18.07.1996 DE 19628980**

(43) Veröffentlichungstag der Anmeldung:
**06.05.1999 Patentblatt 1999/18**

(73) Patentinhaber: **Continental Teves AG & Co. oHG**
**60488 Frankfurt (DE)**

(72) Erfinder:
• **BATISTIC, Ivica**
 **D-60385 Frankfurt am Main (DE)**
• **SCHMIDT, Holger**
 **D-35435 Wettenberg (DE)**

(74) Vertreter: **Blum, Klaus-Dieter**
**Continental Teves AG & Co. oHG,**
**Guerickestrasse 7**
**60488 Frankfurt (DE)**

(56) Entgegenhaltungen:
WO-A-90/09301          DE-A- 4 141 877
DE-C- 4 418 771          DE-C- 4 418 772
FR-A- 2 619 347

EP 0 912 379 B1

**Beschreibung**

Die Erfindung bezieht sich auf ein Verfahren zur Verbesserung des Regelverhaltens eines ABS, insbesondere zur Verbesserung der Lenkbarkeit des Fahrzeugs und der Fahrstabilität während einer Kurvenfahrt, bei dem aus dem Drehverhalten der Fahrzeugräder eine Fahrzeug-Referenzgeschwindigkeit abgeleitet und Kriterien zur Erkennung einer Kurvenfahrtsituation und der Kurvenrichtung gewonnen werden, bei dem bei Kurvenerkennung anstelle des Standard-Regelmodus ein Sonder- bzw. Kurven-Regelmodus in Funktion tritt, der eine Verringerung des Bremsdruckes an dem kurveninneren Vorderrad und/oder Hinterrad hervorruft.

Bei einer Kurvenfahrterkennung wird bei einem Regelverfahren der hier genannten Art durch die Druckentlastung der kurveninneren Räder ein die Kurvenfahrt ausgleichendes, stabilisierendes Giermoment um die Hochachse des Fahrzeugs erzeugt. Der Bremsdruck an den kurvenäußeren Rädern wird, wenn die Regelung während einer Teilbremsung einsetzt, konstant gehalten oder erhöht sich automatisch durch die Unterbindung eines weiteren Bremsdruckaufbaus an dem oder an den kurveninneren Rädern.

Aus der DE 34 13 738 C2 (P 5547) ist bereits ein Blockierschutzregelungssystem (ABS) mit einer Kurvenfahrterkennungsschaltung, die ebenfalls auf der Radschlupfmessung beruht, bekannt. Zur Kurvenfahrterkennung werden die Schlupfwerte an den Rädern einer Fahrzeugseite addiert, mit der Schlupfsumme der Räder der anderen Fahrzeugseite verglichen und ein Kurvenfahrterkennungssignal erzeugt, sobald die Differenz der Schlupfsummen einen vorgegebenen Grenzwert überschreitet. Bei Kurvenfahrterkennung werden dann Auswahlkriterien, wie "Select-low" oder "Select-high", nach denen der Druckverlauf in den einzelnen Bremsdruckregelkanälen dieser Bremsanlage geregelt wird, und Grenzwerte für das Wirksamwerden dieser Auswahlkritierien variiert. Auf diese Weise soll die Regelung den unterschiedlichen Bedingungen während einer Geradeausfahrt und während einer Kurvenfahrt angepaßt werden.

Aus der älteren DE 21 19 590 A1 ist es bekannt, ein Kurvenfahrterkennungssignal mit Hilfe eines Querbeschleunigungsmeßgerätes, wie eines Quecksilberschalters, zu gewinnen.

Ferner ist es bereits bekannt, die Funktionen eines ABS zu erweitern, indem das System zum Verbessern der Fahrstabilität bzw. Bremsstabilität in der Kurve eingesetzt wird. Hierzu wird während einer Kurvenfahrt und einer Teilbremsung, d.h. bei einem Bremsvorgang, bei dem die ABS-Ansprechschwellen nicht erreicht werden, durch eine gezielte Verzögerung des Bremsdruckaufbaus an den kurveninneren Rädern im Vergleich zum Bremsdruck an den kurvenäußeren Rädern ein stabilisierendes Moment um die Hochachse des Fahrzeugs hervorgerufen ("Bremsanlage und Schlupf-Regelsystem der neuen 7er-Reihe von BMW", ATZ 97(1995),Seiten 8-15 und "Bremsanlage und Schlupf-Regelungssysteme der neuen Baureihe 5 von BMW", ATZ 98(1996) Seiten 188-194). Die Information über den aktuellen Lenkwinkel wird, wenn kein Lenkwinkelsensor verwendet wird, aus der Querbeschleunigung abgeleitet, die wiederum aus den Radsensorsignalen berechnet wird.

Der vorliegenden Erfindung liegt nun die Aufgabe zugrunde, ein Verfahren der eingangs genannten Art zu entwickeln, das durch sicheres Erkennen einer Kurvenfahrt und Reagieren auf diese Situation zu einer erheblichen Verbesserung des Fahrverhaltens des Fahrzeugs bzw. Stabilisierung des Fahrzeugs beiträgt.

Es hat sich nun herausgestellt, daß diese Aufgabe durch das im Anspruch 1 beschriebene Verfahren gelöst werden kann, dessen Besonderheit darin besteht, daß im Teilbremsbereich beim Überschreiten eines Schwellwertes der Radgeschwindigkeits-Differenz, die die Differenz zwischen den aus den Radgeschwindigkeiten der beiden Räder einer Fahrzeugseite gebildeten Seiten-Radgeschwindigkeitssummen darstellt, der Bremsdruck an dem kurveninneren Vorderrad und/ oder an dem kurveninneren Hinterrad abgebaut wird, bis der Schwellwert und ein Hystereseband überschritten sind.

Erfindungsgemäß wird also die erwünschte Stabilisierung während einer Kurvenfahrt durch einen massiven Bremsdruckabbau am kurveninneren Rad, d. h. am Vorderrad und/oder Hinterrad, erzielt. Dieser Bremsdruckabbau setzt beim Überschreiten des vorgenannten Schwellwertes der Schlupfdifferenz ein und wird solange fortgesetzt, bis der Schwellwert und ein zuzügliches Toleranz- oder Hystereseband unterschritten sind.

Es hat sich als besonders vorteilhaft erwiesen, den Schwellwert der Radgeschwindigkeits-Differenz in Abhängigkeit von der Fahrzeug(referenz)geschwindigkeit zu variieren. In einem bevorzugten Ausführungsbeispiel nahm der Schwellwert in einem unteren Bereich der Fahrzeuggeschwindigkeit annähernd linear mit der Fahrzeuggeschwindigkeit ab, nahm in einem mittleren Geschwindigkeitsbereich linear mit der Fahrzeuggeschwindigkeit zu und ging schließlich in einen annähernd konstanten Wert über.

Als Hystereseband hat sich ein Wert in der Größenordnung von etwa 2 - 6 km/h, insbesondere von 3 - 4 km/h, als günstig erwiesen.

Weitere Einzelheiten und Anwendungsmöglichkeiten der Erfindung gehen aus der folgenden Darstellung anhand der beigefügten Abbildungen hervor.

Es zeigen

Fig. 1 im Blockschaltbild die wesentlichen elektronischen Komponenten oder Funktionsblöcke eines ABS, das zur Durchführung des erfindungsgemäßen Verfahrens erweitert ist,

Fig. 2 im Flow-Chart die einzelnen Schritte im Programmlauf oder logischen Verknüpfungen des erfindungsgemäßen Verfahrens und

Fig. 3     im Diagramm den Differenz-Schwellwert in Abhängigkeit von der Fahrzeug(referenz)geschwindigkeit.

Sowohl das Blockschaltbild als auch das Flow-Chart und das Diagramm sind schematisch vereinfacht, um das Wesentliche der Erfindung zu verdeutlichen.

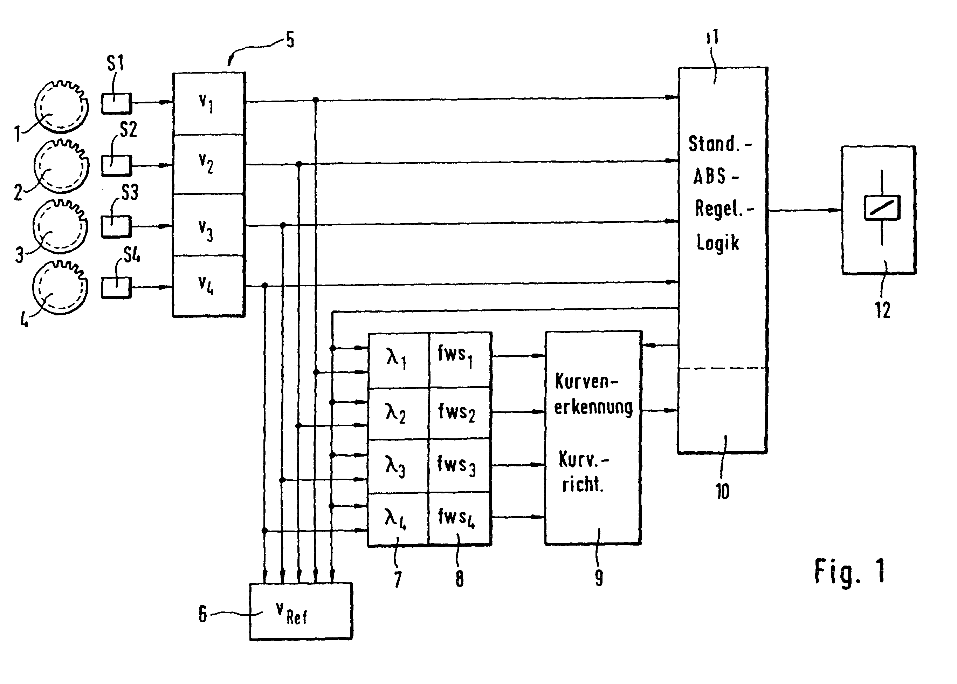

Die prinzipielle Arbeitsweise einer Schaltungsanordnung zur Blockierschutzregelung, die durch Komponenten zur Verbesserung des Regelverhaltens während einer Kurvenfahrt erweitert ist, ist in Fig. 1 wiedergegeben.

Die Eingangsinformationen des Regelsystems werden mit Hilfe von Radsensoren S1 bis S4 gewonnen. Hierzu sind die einzelnen (nicht dargestellten) Fahrzeugräder mit Meßwertgebern oder Zahnscheiben 1 - 4 ausgerüstet, die mit den Fahrzeugrädern umlaufen und in den Meßwertaufnehmern, das sind die ortsfesten Teile der Sensoren S1 - S4, ein Ausgangssignal erzeugen. Diese Ausgangssignale geben in bekannter Weise das Drehverhalten der einzelnen Räder wieder.

Nach dem Aufbereiten der Sensor-Ausgangssignale in einer Schaltung 5 stehen die Radgeschwindigkeitssignale $v_1$ - $v_4$ zur Verfügung. Durch logische Verknüpfung der Ausgangssignale der Schaltung 5, nämlich der Geschwindigkeitssignale $v_1$ - $v_4$, in einer Verknüpfungsschaltung 6 wird eine Fahrzeug-Referenzgeschwindigkeit $v_{Ref}$ gebildet, die vor allem als Bezugsgröße zur Bestimmung des Radschlupfes $\lambda_1$ bis $\lambda_4$ der einzelnen Fahrzeugräder und damit auch als Bezugsgröße zur Bremsdruckmodulation dient.

Ein Schaltungsblock 7 enthält die einzelnen Schaltkreise zum Ermitteln des Radschlupfes $\lambda_1$ bis $\lambda_4$ durch Vergleich der Fahrzeug-Referenzgeschwindigkeit mit der jeweiligen Radgeschwindigkeit $v_1$ - $v_4$. Der Radschlupf ergibt sich bekanntlich aus der Differenz

$$\lambda_i = v_{Ref} - v_i \qquad \text{mit } i = 1 .... 4.$$

Bei Verwendung einer programmgesteuerten Schaltung, wie eines Mikrocomputers oder Mikrocontrollers, symbolisiert der Block 7 die Programmschritte zum Errechnen des Schlupfes $\lambda_i$ der einzelnen Fahrzeugräder.

Jedes Schlupfsignal passiert in einem Schaltblock 8 ein Filter mit Tiefpaß-Charakteristik, dessen Filterzeitkonstante in der Größenordnung von 50 - 200 ms liegen kann; in unserem Beispiel liegt die Zeitkonstante bei 70 ms. Der Schaltblock 8 gibt ein gefiltertes Radschlupfsignal $fws_i$ ab bzw. leitet dieses Ausgangssignal zu einer Kurvenerkennung 9 weiter.

In der Kurvenerkennung 9 oder Kurvenfahrterkennung werden die aktuellen und die gefilterten Radschlupfsignale analysiert und ausgewertet. Die Kurvenfahrterkennung findet dabei nach qualitativen und quantitativen Kriterien statt. Die Kurvenrichtung wird ebenfalls durch Auswertung und logische Verknüpfung der Schlupfsignale und Schlupfdifferenzsignale ermittelt. Das Ergebnis dieser Schlupfauswertung mit Hilfe der Schaltung 9 führt dann über eine Zusatzschaltung 10, nämlich einer Zusatzschaltung zu der eigentlichen Standard-ABS-Regelungslogik 11, zur Anpassung der Blockierschutzregelung an die besonderen Bedingungen einer Kurvenfahrt. Anstelle der Standard-Regelung findet nun eine Sonder- oder Kurvenregelung statt.

Der Ausgang der Regelungslogik 11 führt über nicht dargestellte Aufbereitungs- und Auswertungsschaltungen zu den Aktuatoren oder Modulatoren 12, mit denen der Bremsdruck einer Bremsanlage in der erforderlichen Weise beeinflußt wird. Bei den heutigen Antiblockiersystemen werden überwiegend als Aktuatoren 12 elektromagnetisch betätigbare Hydraulikventile zur Modulation und Steuerung des Bremsdruckes in den einzelnen Radbremsen verwendet.

Die eigentliche ABS-Regelungslogik beruht natürlich ebenfalls auf der Auswertung der aufbereiteten Radgeschwindigkeitssignale $v_1$ - $v_4$ unter Berücksichtigung der Fahrzeug-Referenzgeschwindigkeit $v_{Ref}$.

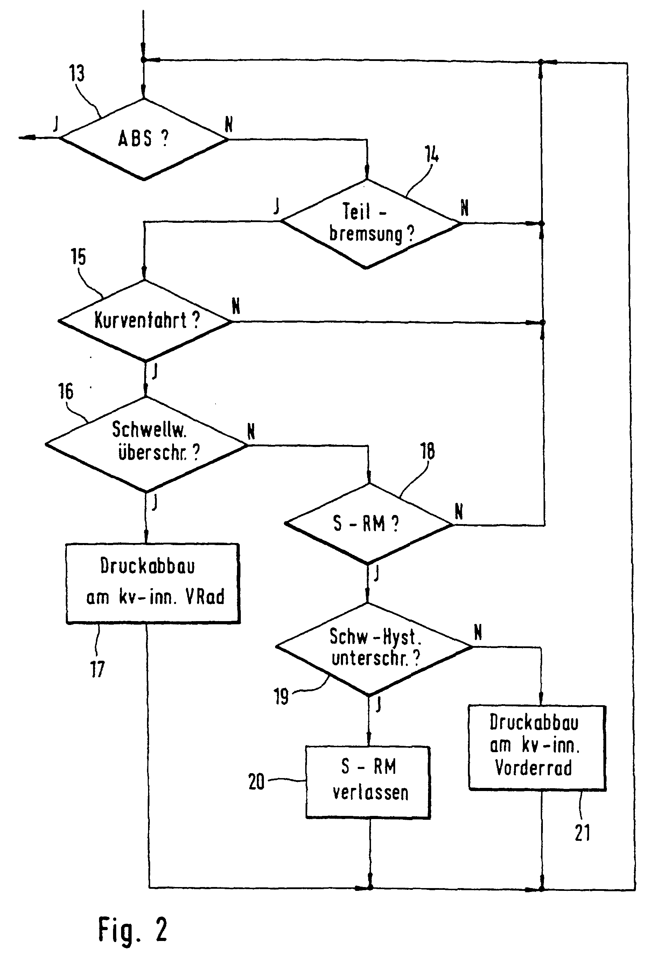

Die Funktionen einer Schaltungsanordnung nach Fig. 1 lassen sich, wie bereits erwähnt wurde, durch programmgesteuerte Schaltungen bzw. durch Programmablauf realisieren. Derartige Reglertechnik wird heutzutage bevorzugt. In Fig. 2 ist daher der Programmlauf, durch den das erfindungsgemäße Verfahren in Regelungsschritte umgesetzt wird, in Form eines Flow-Charts dargestellt. Diese Funktionen, Schritte und logischen Verknüpfungen sind überwiegend in der Kurvenerkennung 9 untergebracht.

Fig. 2 zeigt einen Ausschnitt aus einem ABS-Regelungsprogramm.

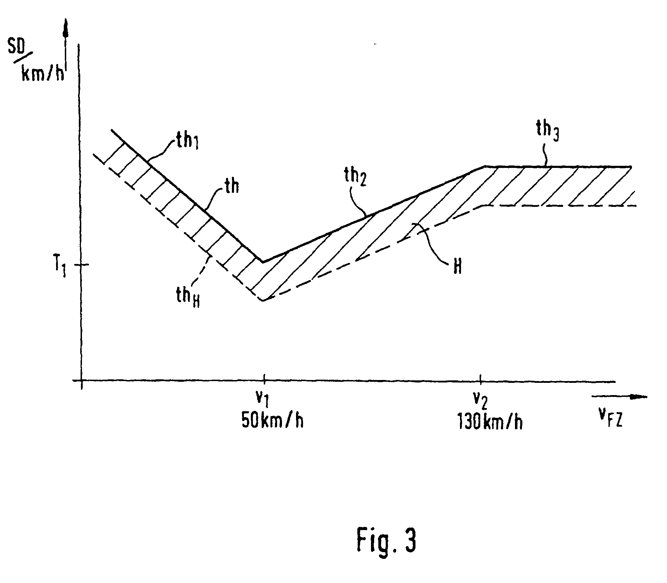

Das erfindungsgemäße Sonderprogramm findet im Teilbremsbereich, also außerhalb der eigentlichen Blockierschutzregelung statt. Es wird daher in einem Schritt 13 zunächst festgestellt, ob ein ABS-Regelungsvorgang gerade abläuft. Lautet die Antwort in 13 "ja"(J), wird die Standard-Regelung fortgesetzt, lautet sie "nein" (N), ist also die ABS-Regelung nicht in Funktion, und wird gemäß Verzweigungsstelle 14 tatsächlich gebremst (Teilbremsung: ja), hängt der weitere Entscheidungsverlauf davon ab, ob das Vorliegen einer Kurvenfahrtsituation erkannt wurde (15: ja). Nun gilt es festzustellen, ob ( Verzweigung 16) ein vorgegebener Schwellwert der Schlupfdifferenz SD überschritten wurde. Anschließend wird anhand der Fig. 3 dieser Vorgang bzw. dieser Schwellwert näher erläutert.

Wurde die Schwelle überschritten, wird über den "Ja"-Ausgang der Entscheidungsstelle 16 ein starker Bremsdruckabbau an den kurveninneren Rädern oder nur an dem kurveninneren Vorderrad herbeigeführt. Diese Operation wird in Fig. 2 durch 17 symbolisiert.

Wurde die Schwelle nicht überschritten (16: N), hängt der weitere Programmverlauf gemäß Entscheidungsstelle 18 davon ab, ob bereits durch einen Sonder-Regelmodus ein Bremsdruckabbau erfolgte. Wenn Nein (Ausgang N der Verzweigung 18), führt der Programmlauf zum Ausgangspunkt zurück. Wenn "Ja" und wenn eine Größe:"Schwelle minus Hysterese" (Verzweigung 19) wieder unterschritten sind (Ausgang: J), wird, wie die Operation 20 symbolisiert, der Sonder-Regelmodus beendet, weil der durch die Kurvenfahrt bedingte Sonderregelungsbedarf praktisch abgeschlossen ist.

Lautet die Antwort auf die Frage 19 "nein", wird die Bremsdruckmanipulation im Funktionsblock 21 in der gleichen Weise wie im Schritt 17 (Operator 17) durchgeführt: Es wird Bremsdruck am kurveninneren Vorderrad oder an beiden kurveninneren Rädern abgebaut. Die Sonder-Regelung zur Verbesserung der Fahrstabilität wird fortgesetzt.

Die erfindungsgemäße Bremsdruckmanipulation am kurveninneren Rad setzt also, wie anhand des Flow-Charts nach Fig. 2 erläutert wurde, eine Teilbremsung außerhalb der ABS-Regelung voraus. Von entscheidender Bedeutung ist die Differenz-Schwelle, die gemäß Fig. 3 in Abhängigkeit von der Fahrzeuggeschwindigkeit oder Fahrzeugreferenzgeschwindigkeit variiert. Dieser Differenzwert SD gibt die Differenz zwischen den durch Addition der Geschwindigkeiten der beiden Räder einer Fahrzeugseite gebildeten Seiten-Radgeschwindigkeitssummen, kurz "Seitensummen", wieder. Als Formel ausgedrückt bedeutet dies:

$$SD = |(v_{VL} + v_{HL}) - (v_{VR} + v_{HR})|$$

In dieser Formel sind mit den Indices VL, VR das linke und rechte Vorderrad, mit den Indices HL und HR das linke und rechte Hinterrad bezeichnet. Folglich ist $(v_{VL} + v_{HL})$, die Geschwindigkeitssumme der linken Räder, $(v_{VR} + v_{HR})$ die Geschwindigkeitssumme der rechten Fahrzeugräder. Der Absolutwert der aus diesen beiden Summen gebildeten Differenz ergibt den Differenzwert SD.

Fig. 3 veranschaulicht den Verlauf des Differenz-Schwellwertes $th=f(v_{FZ})$ in Abhängigkeit von der Fahrzeug(referenz)geschwindigkeit. Der Schwellwertverlauf ist abhängig von der Fahrzeuggeschwindigkeit, wobei sich das dargestellte Beispiel auf einen modernen PKW der gehobenen oder Mittelklasse mit Vorderrad- oder Hinterradantrieb bezieht. Je nach Fahrwerkkonstruktion kann sich auch ein anderer Verlauf, eine Verschiebung der Kennlinien oder eine andere Abhängigkeit von der Fahrzeuggeschwindigkeit als zweckmäßig erweisen.

Im vorliegenden Fall nimmt die Differenzschwelle $th=f(v_{FZ})$ im unteren Geschwindigkeitsbereich, beispielsweise bis zu einer Fahrzeuggeschwindigkeit von etwa 50 km/h annähernd linear ($th_1$) ab. In einem mittleren Geschwindigkeitsbereich, der hier zwischen 50 km/h und 130 km/h liegt und daher für die Lenkbarkeit und Fahrzeugstabilität oder Fahrstabilität besonders wichtig ist, nimmt der Schwellwert mit dem Gradienten $th_2$ annähernd linear zu. Oberhalb der oberen Geschwindigkeitsschwelle von hier 130 km/h schließt sich daran ein annähernd konstanter Schwellwertverlauf an.

Solange die Differenz unterhalb der Kennlinie $th=f(v_{FZ})$ liegt, nimmt die Blockierschutzregelung im Teilbremsbereich, d.h. solange die eigentlichen ABS-Ansprechschwellen nicht erreicht werden, keinen Einfluß auf den Bremsdruckverlauf an den kurveninneren Rädern. Wenn jedoch die Schlupfdifferenz SD den Schwellwert $th; th_1, th_2, t_{h3}$ überschreitet, setzt sofort, wie dies bereits anhand des Flow-Charts nach Fig. 2 erläutert wurde, der Druckabbau am kurveninneren Vorderrad und/oder Hinterrad ein. Dieser Druckabbau dauert dann so lange an, bis der Differenzwert SD an dem beobachteten Rad den Schwellwert $th; th_1, th_2, th_3$ und zuzüglich das Hystereseband H durchläuft und wieder unterschritten hat; nach dem Unterschreiten des Hysteresebandes bzw. der in Fig. 3 gestrichelt dargestellten Kennlinie $th_H$ wird die erfindungsgemäße Sonderregelung wieder aufgehoben und der Stabilisierungsmodus verlassen. In vielen Fällen ist es ausreichend und zweckmäßig, den erforderlichen Druckabbau durch einen einzigen Druckabbaupuls von 20 bis 50 ms, typischerweise 30 ms, herbeizuführen; ein zu starker Druckabbau, der einen erneuten Druckaufbau nach sich ziehen würde, sollte grundsätzlich vermieden werden.

Der in Fig. 3 dargestellte Verlauf des Differenz-Schweilwerts $th=f(v_{FZ})$ läßt sich mathematisch durch die linearen Funktionen

$$th_1 = -k_1 (v_1 - v_{FZ}) + T_0$$

$$th_2 = k_2 (v_{FZ} - v_1) + T_1$$

$$th_3 = k_3$$

mit z.B. $v_1$ = 40 bis 60 km/h
   $T_1$ = 8 bis 10 km/h
darstellen.

Die Schwellwertkurve kann in der Praxis durch empirische Methoden dem gewünschten Verlauf noch genauer angepaßt werden.

**Patentansprüche**

1. Verfahren zur Verbesserung des Regelverhaltens eines ABS, insbesondere zur Verbesserung der Lenkbarkeit des Fahrzeugs und der Fahrstabilität während einer Kurvenfahrt, bei dem aus dem Drehverhalten der Fahrzeugräder eine Fahrzeug-Referenzgeschwindigkeit abgeleitet und Kriterien zur Erkennung einer Kurvenfahrtsituation und der Kurvenrichtung gewonnen werden, bei dem bei Kurvenerkennung anstelle des Standard-Regelmodus ein Sonder- bzw. Kurven-Regelmodus in Funktion tritt, der eine Verringerung des Bremsdruckes an dem kurveninneren Vorderrad und/oder Hinterrad hervorruft, **dadurch gekennzeichnet, daß** im Teilbremsbereich beim Überschreiten eines Schwellwertes (th;$th_1$,$th_2$,$th_3$) der Radgeschwindigkeits-Differenz (SD), die die Differenz zwischen den aus den Geschwindigkeiten der beiden Räder einer Fahrzeugseite gebildeten Seiten-Radgeschwindigkeitssummen darstellt, der Bremsdruck an dem kurveninneren Vorderrad und/oder an dem kurveninneren Hinterrad abgebaut wird, bis der Schwellwert (th;$th_1$,$th_2$,$th_3$) und ein Hystereseband (H), unterschritten sind.

2. Verfahren nach Anspruch 1, **dadurch gekennzeichnet, daß** der Schwellwert (th;$th_1$,$th_2$,$th_3$) der Radgeschwindigkeiten-Differenz (SD) in Abhängigkeit von der Fahrzeuggeschwindigkeit ($v_{FZ}$) variiert wird.

3. Verfahren nach Anspruch 2, **dadurch gekennzeichnet, daß** der Schwellwert (th;$th_1$,$th_2$,$th_3$) in Abhängigkeit von der Fahrzeuggeschwindigkeit ($v_{FZ}$) in einem unteren Bereich annähernd linear mit der Fahrzeuggeschwindigkeit (f($th_1$)) abnimmt,in einem mittleren Geschwindigkeitsbereich annähernd linear mit der Fahrzeuggeschwindigkeit zunimmt (f($th_2$)) und in einem oberen Geschwindigkeitsbereich annähernd konstant verläuft (f($th_3$)).

4. Verfahren nach Anspruch 3, d durch **gekennzeichnet,** daß der untere Geschwindigkeitsbereich (f($th_1$)) bis zu einem Fahrzeuggeschwindigkeits-Wert zwischen etwa 40 - 60 km/h reicht, der mittlere Geschwindigkeitsbereich (f(th**2**)) bis zu einem Wert zwischen etwa 110 und 150 km/h, zum Beispiel bis etwa 130 km/h reicht, an den sich dann der obere Geschwindigkeitsbereich (f($th_3$)) anschließt.

5. Verfahren nach einem oder mehreren der Ansprüche 1 bis 4, **dadurch gekennzeichnet, daß** das Hystereseband (H) in der Größenordnung von etwa 2 - 6 km/h, insbesondere 3 - 4 km/h, liegt.

**Claims**

1. Method for improving the control behaviour of an ABS control system, in particular for improving the steerability of the vehicle and the driving stability during cornering, wherein a reference speed of the vehicle is derived and criteria for identifying a cornering situation and the direction of the corner are obtained from the rotational behaviour of the vehicle wheels, wherein, instead of the standard control mode, a special control mode or rather corner control mode comes into operation when a cornering situation is identified, said special control mode or corner control mode causing a reduction of the braking pressure on the front wheel and/or on the rear wheel on the inside of the corner, **characterized in that**, in the partial braking range, with a threshold value (th;$th_1$,$th_2$,$th_3$) of the wheel speed difference (SD) being exceeded, which difference is the difference between the wheel speed sums per side formed from the speeds of the two wheels of one side of the vehicle, the braking pressure is reduced on the front wheel on the inside of the corner and/or on the rear wheel on the inside of the corner until there is a drop below the threshold value (th;$th_1$,$th_2$,$th_3$) and below a hysteresis band (H).

2. Method as claimed in claim 1, **characterized in that** the threshold value (th;$th_1$, $th_2$,$th_3$) of the wheel speed difference (SD) is varied in dependence on the vehicle speed ($v_{FZ}$).

3. Method as claimed in claim 2, **characterized in that**, in dependence on the vehicle speed ($v_{FZ}$), the threshold value (th;$th_1$,$th_2$,$th_3$) decreases approximately linearly with the vehicle speed (f($th_1$)) in a lower range, increases approximately linearly with the vehicle speed (f($th_2$)) in a medium speed range and is approximately constant (f($th_3$)) in an upper speed range.

4. Method as claimed in claim 3, **characterized in that** the lower speed range (f($th_1$)) reaches as far as a vehicle speed value between approximately 40 - 60 k.p.h., **in that** the medium speed range (f($th_2$)) reaches as far as a value between approximately 110 and 150 k.p.h., for instance, as far as approximately 130 k.p.h., which then is followed by the upper speed range (f($th_3$)).

5. Method as claimed in anyone or several of claims 1 through 4, **characterized in that** the hysteresis band (H) lies in the order of magnitude of approximately 2 - 6 k.p.h., in particular of 3 - 4 k.p.h.

**Revendications**

1. Procédé pour améliorer le comportement en régulation d'un système ABS, en particulier pour améliorer la direction du véhicule et la stabilité en marche dans une courbe, dans lequel on dérive, du comportement en rotation des roues du véhicule, une vitesse de référence du véhicule et on obtient des critères pour reconnaître une situation de conduite en courbe et le sens de la courbe, dans lequel, en cas de reconnaissance d'une courbe, à la place du mode de régulation standard entre en fonction un mode de régulation spécial ou de courbe qui provoque une réduction de la pression de freinage sur la roue avant et/ou la roue arrière côté intérieur de la courbe, **caractérisé en ce que** dans le domaine du freinage partiel, en cas de dépassement d'une valeur seuil (th ; $th_1$, $th_2$, $th_3$) de la différence de la vitesse des roues (SD) qui constitue la différence entre les sommes des vitesses des roues des côtés, formées à partir des vitesses des deux roues d'un côté du véhicule, la pression de freinage est réduite sur la roue avant côté intérieur de la courbe et/ou la roue arrière côté intérieur de la courbe, jusqu'à ce que la valeur seuil (th ; $th_1$, $th_2$, $th_3$) et une bande d'hystérésis (H) soient dépassées.

2. Procédé selon la revendication 1, **caractérisé en ce qu'**on fait varier la valeur seuil (th ; $th_1$, $th_2$, $th_3$) de la différence des vitesses des roues (SD) en fonction de la vitesse du véhicule ($v_{FZ}$)

3. Procédé selon la revendication 2, **caractérisé en ce qu'**en fonction de la vitesse du véhicule ($v_{FZ}$), la valeur seuil (th ; $th_1$, $th_2$, $th_3$) diminue, dans un domaine inférieur, approximativement linéairement avec la vitesse du véhicule ($f(th_1)$), **en ce qu'**elle augmente ($f(th_2)$) de manière approximativement linéaire dans un domaine moyen de la vitesse, et reste à peu près constante ($f(th_3)$) dans un domaine supérieur de la vitesse.

4. Procédé selon la revendication 3, **caractérisé en ce que** le domaine inférieur de la vitesse ($f(th_1)$) s'étend jusqu'à une valeur comprise entre environ 40 et 60 km/h de la vitesse du véhicule, le domaine moyen de la vitesse ($f(th_2)$) s'étend jusqu'à une valeur comprise entre environ 110 et 150 km/h, par exemple jusqu'à environ 130 km/h, auquel fait suite le domaine supérieur de la vitesse ($f(th_3)$).

5. Procédé selon une ou plusieurs des revendications 1 à 4, **caractérisé en ce que** la bande d'hystérésis (H) est d'un ordre de grandeur d'environ 2 à 6 km/h, en particulier de 3 à 4 km/h.

Fig. 1

S1
S2
S3
S4

$v_1$
$v_2$
$v_3$
$v_4$

5

$v_{Ref}$

6

$\lambda_1$ $fws_1$
$\lambda_2$ $fws_2$
$\lambda_3$ $fws_3$
$\lambda_4$ $fws_4$

7   8

Kurvenerkennung

Kurv.-
richt.

9

Stand.-
ABS-
Regel.-
Logik

11

10

12

7

EP 0 912 379 B1

**Fig. 2**

Fig. 3